**Europäisches Patentamt**

**European Patent Office**

**Office européen des brevets**

(19)

(11) Publication number : **0 501 931 A1**

# (12) EUROPEAN PATENT APPLICATION

(21) Application number : **92830078.9**

(22) Date of filing : **25.02.92**

(51) Int. Cl.$^5$ : **A01M 7/00,** B05B 15/06

PRIORITY 280291 ITU RM91000045.

(30) Priority : **28.02.91**

(43) Date of publication of application :
**02.09.92 Bulletin 92/36**

(84) Designated Contracting States :
**AT CH DE ES FR GB GR IT LI PT**

(71) Applicant : **S.I.A.P.A. - Societa Italo Americana Prodotti Antiparassitari S.p.A.**
**16 Via Yser**
**I-00198 Roma RM (IT)**

(72) Inventor : **Di Vincenzo, Vincenzo**
**32 Via A. Fusco**
**I-00136 Roma RM (IT)**

(74) Representative : **Bazzichelli, Alfredo et al**
**c/o Società Italiana Brevetti S.p.A. Piazza di Pietra, 39**
**I-00186 Roma (IT)**

(54) **Directionally adjustable spray head for spraying machines.**

(57)   A spray head (1) for spraying machines, in particular for agricultural use, comprising an atomizing nozzle (2) coupled by means of a ball joint system (8,9) to its connection base (3) so as to rotate, with three degrees of freedom, by 360° around its own axis and by at least 45° with respect to said connection base (3), so as to be appropriately adjusted according to operative needs.

Fig. 1

The present invention refers to a directionally adjustable spray head for spraying machines, in particular for use in agriculture.

The most rational concepts of modern phytotherapy impose an ever more careful and efficient defence against parasites. All interventions in agriculture must be organized however with the constant aim of obtaining maximum possible precision in "hitting the target", so as to guarantee, along with positive technical results, the safety of the environment, and a notable economic saving through suitable reduction of the amounts of product used, distribution costs and time required.

Uniform coverage of foliage, on both sides of the leaves, and diffusion of the product within the vegetation, form one of the essential points of all anti-parasite interventions which are based on the canons of rational and functional methods of use.

In consequence of the above and following the great interest for the technique of specific treatment localized on the crops, using the low volume pneumatic system, the need has now arisen to be able to adjust the angle of incidence with respect to the crops of the jet sprayed by the spray heads of spraying machines, both in order to improve the results of treatments, and in order to save on the products to be sprayed and to eliminate, or at least reduce to a minimum, the dispersion of said products into the environment.

In this sense there are at present known various systems for adjusting the direction of a jet from a spray head, among which a system can be mentioned for adjustment on a single plane by means of clamps and a corrugated sleeve, a system for adjustment on two planes by means of a slotted clamp and a corrugated sleeve, a ball adjustment system with threaded ring nut, all of which, although obtaining appreciable results, are not capable of answering the requirements of constructional simplicity, ease of manoeuvre, high efficiency and acceptable costs.

The object of the present invention is to provide a spray head for spraying machines, in particular for agricultural use, provided with a surprisingly simple, functional and economic system for its orientation, which, furthermore, is capable of adjusting its direction over a notably wider range than that which can be covered by similar known devices.

The object mentioned above is obtained, according to the present invention, by connecting the atomizing nozzle of the spraying machine in question to the attachment base by means of a ball joint system.

More particularly, an object of the present invention is a directionally adjustable spray head for a spraying machine, having a plurality of said spray heads arranged on a pneumatic boom for delivering a plurality of jets of atomized liquid droplets, characterized in that said spray head is formed of two mutually engaged distinct parts, the first part being an atomizing nozzle and the second part being a tubular base connected to said pneumatic boom, said atomizing nozzle and said base being mutually engaged at respective coupling portions having the shape of a section of a sphere and forming a spherical ball joint following a partial insertion of one portion into the other with friction fit.

The present invention will be more clearly illustrated hereinafter from the description of non-limitative preferred embodiments, and with reference to the enclosed drawings, in which:

figure 1 is a partial cross-section view, in partial elevation, of the spray head according to the present invention;

figure 2 is a cross-section view along the line A-A of figure 1;

figure 3 is a view similar to that of figure 1 of a modification of the spray head according to the present invention; and

figure 4 is a view similar to that of figure 1 of a second alternative modification of the spray head according to the present invention.

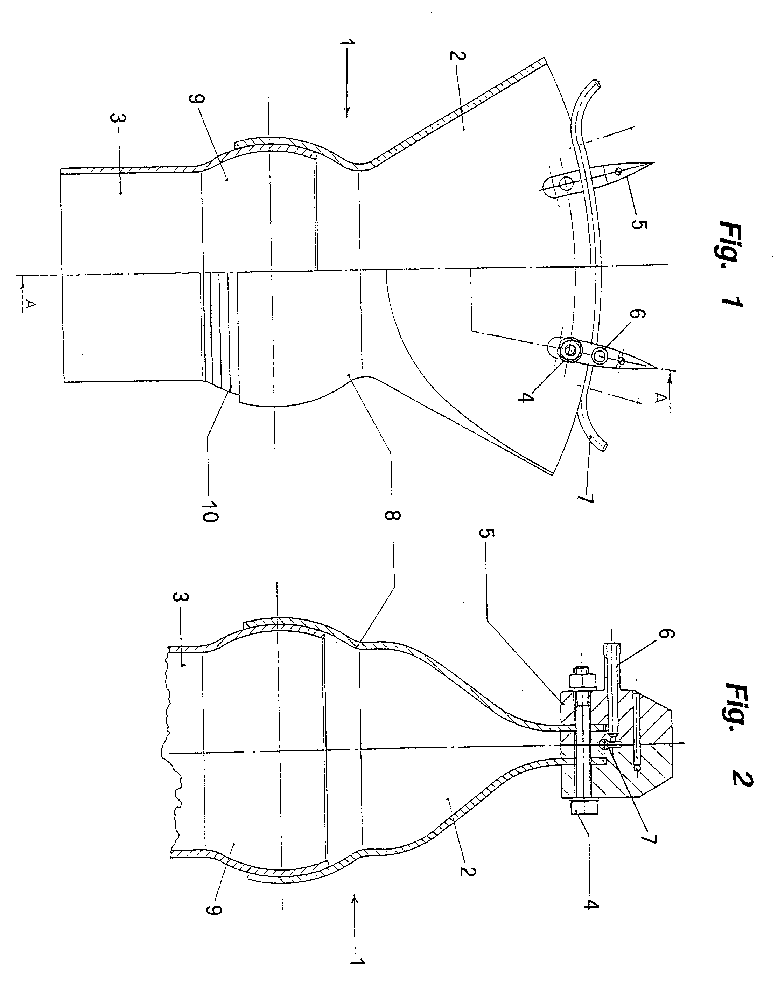

With reference to figures 1 and 2, there is shown a spray head for agricultural spraying machines, generally indicated with 1, which incorporates a system for adjustment according to the present invention.

The spray head 1 is formed of two distinct parts, of which one, indicated with 2, is an atomizing nozzle, and the other, indicated with 3, is a tubular connection base to couple with and be fixed onto a corresponding tubular section integral with the pneumatic boom of the spraying machines.

The atomizing nozzle 2, of a fan type, shown in the above mentioned figures as an example, is of the type forming the object of Italian patent number 1197604 by the same Applicant, entitled "Micronizer for pneumatic atomizing-powdering machines, in particular for agricultural use", issued on 6 December 1988, incorporated here as a reference. On the output mouth of the nozzle, aerodynamically shaped elements 5, numbering two in the present embodiment, are mounted, by means of bolts 4. The elements 5 have passages 6 through which the product to be delivered passes, generally in the form of a liquid. The product leaves the passages at a point adjacent to a rod-like element 7, supported by the aerodynamically shaped elements 4. The rod-like element serves the purpose of creating on the upstream side, with respect to the flow of air passing through the spray head 1 in the direction of said delivery mouth, an area of relatively high pressure, and on the downstream side an area of relatively low pressure. The product in liquid form being delivered, as stated above, through the aerodynamically shaped elements 5 at a point adjacent to the rod-like element 7, is sucked back along the latter on the downstream side by said area of relatively low pressure, going on to be drawn by the flow of air in the form of atomized droplets, uniformly distributed within the air flow over the whole of the area involved by said rod-like element.

According to the present invention, the atomizing nozzle 2 of the adjustable spray head in object has, as a continuation of the neck area, a portion 8 with a spherical cross-section. Portion 8 is suitable to be pressure fitted over a corresponding portion 9, also having a spherical cross-section, of the tubular connection base 3 so as to create a spherical ball joint. This allows rotation, with three degrees of freedom, of the atomizing nozzle 2 of spray head 1 by 360° around its own axis, and by at least 45° with respect to the tubular connection base 3, so as to direct the jet from the spray head in an appropriate manner with respect to the crops, according to the working conditions.

Preferably, on the visible outer surface of the portion 9 of the tubular connection base 3 a series of parallel circles 10 is formed, to indicate the respective degrees of inclination of the atomizing nozzle 2 at the point of coincidence of the free edge of portion 8.

The spray head according to the present invention, made preferably of thermoplastic material, has, unlike similar traditional products, all the requisites necessary for devices of this kind, including, along with the wide range of rotation mentioned above, elasticity, resistance to chemical agents and mechanical stress.

The pressure fitting of the two spherically cross-sectioned portions and the friction created between their sliding surfaces make it possible to maintain the spray head, and thus also the atomized spray, in a stably inclined position with respect to the crops, as well as giving a perfect air-tight seal and allowing the flow of air sent to the atomizing nozzle to pass through without resistance or interference.

The parts forming the spherical ball joint of the spray head in object can be made with extreme ease and at greatly reduced costs. For example, the portions destined to form the two spherical sections, originally cylindrical tubes, of thermoplastic material, such as PVC, can first be made to undergo softening, followed by molding using spherical molds.

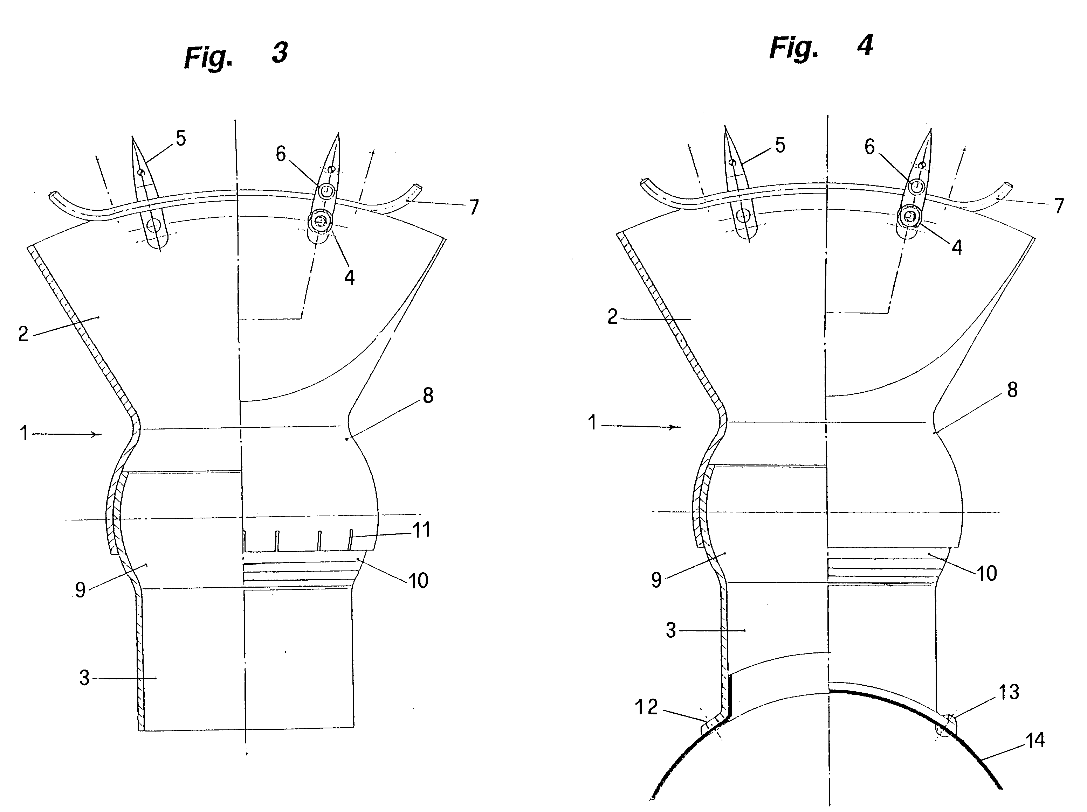

In figure 3 an alternative embodiment of the directionally adjustable spray head according to the present invention is shown.

As can be seen in figure 3, in which elements previously described with reference to figures 1 and 2 are indicated by the same reference numerals without further illustration, the spray head 1 shown therein differs from that shown in the first embodiment in that the free edge of the portion with a spherical cross-section 9 of the atomizing nozzle 2 has a circumferential series of short, equidistant, axial slots 11. This provides a greater elasticity to the portion so as to obtain an easier pressure fitting between the portions and a less strong locking into position of the spray head.

Finally, in figure 4, a further modification of the spray head in object is shown, in which the same elements previously described with reference to figures 1 and 3 are indicated by the same reference numerals without further illustration. This embodiment differs from the preceding embodiments in the fact that the tubular connection base 3 has a flange 12 on its free extremity for direct fixing, for example by means of rivets 13, to the pneumatic boom 14 of the spraying machine.

## Claims

1. Directionally adjustable spray head for a spraying machine, having a plurality of said spray heads arranged on a pneumatic boom for delivering a plurality of jets of atomized liquid droplets, characterized in that said spray head (1) is formed of two mutually engaged distinct parts (2,3), the first part (2) being an atomizing nozzle and the second part (3) being a tubular base connected to said pneumatic boom, said atomizing nozzle and said base being mutually engaged at respective coupling portions (8,9) having the shape of a section of a sphere and forming a spherical ball joint following a partial insertion of one portion into the other with friction fit.

2. Spray head according to claim 1, in which said spherical ball joint is such as to allow said first part (2) to rotate, with three degrees of freedom, by 360° around its own axis and by at least 45° with respect to said second part (3).

3. Spray head according to claims 1 or 2, in which the free edge of said coupling portion (8) of said first part (2) has a circumferential series of short, equidistant, axial slots (11).

4. Spray head according to any one of the preceding claims, in which the free edge of said second part (3) has a fixing flange (12).

5. Spray head according to any one of the preceding claims, in which the exposed external surface of the coupling portion (9) of said second part (3) has a series of parallel circles (10) to indicate respective degrees of inclination of said first part (2) with respect to said second part (3).

**Fig. 1**

**Fig. 2**

Fig. 3

Fig. 4

## EUROPEAN SEARCH REPORT

**European Patent Office**

Application Number

EP 92 83 0078

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-1 393 524 (ETABLISSEMENTS P. BERTHOUD) <br> * page 2, left column, last paragraph - page 3, right column, paragraph 5; figures 1-17 * | 1 | A01M7/00 <br> B05B15/06 |
| A | | 2 | |
| A | GB-A-2 166 980 (BOARD OF TRUSTEES OF MICHIGAN STATE UNIVERSITY) <br> * figures * <br> * page 3, line 113 - page 4, line 18 * <br> * page 6, line 59 - line 74 * | 1 | |
| A | GB-A-900 753 (R. BAUER) <br> * page 2, line 60 - line 99; figure 3 * | 1 | |
| A | DE-A-2 943 154 (A. FAZARI) <br> * claims 1-4; figures 1-3 * | 1 | |
| A | FR-A-409 155 (F. ALTSTOCK) <br> * page 2, line 14 - line 20; figure 4 * | 1 | |
| | ----- | | TECHNICAL FIELDS SEARCHED (Int. Cl.5 ) <br><br> A01M <br> B05B <br> A01C |

The present search report has been drawn up for all claims

| Place of search | Date of completion of the search | Examiner |
|---|---|---|
| THE HAGUE | 09 JUNE 1992 | RAVEN P. |